# EUROPÄISCHE PATENTSCHRIFT

(11) **EP 1 440 648 B1**
(45) Veröffentlichungstag und Bekanntmachung des Hinweises auf die Patenterteilung: **03.08.2005**
(21) Anmeldenummer: 04001037.3
(22) Anmeldetag: 20.01.2004
(51) Int. Cl.: A47J 43/044, A47J 31/44

(54) **Vorrichtung zum Aufschäumen eines Getränkes sowie Kaffeeautomat mit einer solchen Vorrichtung**
Device for frothing a beverage and coffee machine with such a device
Dispositif pour faire mousser une boisson et machine à café avec ce dispositif

(30) Priorität: 21.01.2003 DE 20300851 U
(43) Veröffentlichungstag der Anmeldung: 28.07.2004
(73) Patentinhaber: WIK Far East Ltd., North Point, Hong Kong (CN)
(72) Erfinder: Steckhan, Markus, 45481 Mülheim (DE)
(74) Vertreter: Schröter & Haverkamp

(56) Entgegenhaltungen:
- EP-A- 1 264 567
- DE-A- 19 623 250
- US-A- 5 730 525

## Beschreibung

Die Erfindung betrifft eine Vorrichtung zum Aufschäumen eines Getränks, etwa von Milch oder eines Milchmischgetränks, umfassend eine Einrichtung zum Halten eines das aufzuschäumende Getränk enthaltenden Gefäßes sowie umfassend eine Einrichtung zum Erzeugen des zum Aufschäumen benötigten Mediums mit einem in das Gefäß absenkbaren Verbindungselement zum Zuführen des Mediums von der Einrichtung zu dem in dem Gefäß befindlichen aufzuschäumenden Getränk. Ferner betrifft die Erfindung einen Kaffeeautomaten mit einer solchen Vorrichtung.

Vorrichtungen zum Aufschäumen eines Getränks, etwa von Milch oder eines Milchgetränkes werden entweder als Handgeräte eingesetzt oder sind Teil eines Kaffeeautomaten. Mit diesen Vorrichtungen kann beispielsweise Milch zum Bereiten eines Cappuccinos aufgeschäumt werden.

Als Handgeräte ausgebildete Milchaufschäumer verfügen über einen Elektromotor, der eine Welle antreibt. An dem freien Ende der Welle ist ein Schaumschläger angeordnet. Zum Aufschäumen der in einem Gefäß befindlichen Milch wird manuell der Schaumschläger in das Gefäß eingeführt, im Bereich des Flüssigkeitsspiegels gehalten und solange betrieben, bis der gewünschte Aufschäumvorgang abgeschlossen ist. Als Medium zum Aufschäumen des Getränks dient bei dieser Ausgestaltung der Schaumschläger, dessen mechanische Energie durch die Welle von dem Elektromotor übertragen wird.

Kaffeeautomaten verfügen zum Aufschäumen von Milch, etwa für die Zubereitung eines Cappuccinos, ein Dampfrohr mit einer endseitigen Dampfdüse. Als Einrichtung zum Erzeugen des zum Aufschäumen benötigten Mediums - Dampf - wird im Gegensatz zu dem zuvor beschriebenen Handgerät ein Dampferzeuger eingesetzt. Das Dampfrohr wird mit seiner Dampfdüse zum Aufschäumen von Milch in das Gefäß eingebracht. Anschließend wird die Dampfzuführung geöffnet, so dass durch das Dampfrohr und die endseitige Düse der geräteseitig erzeugte Dampf transportiert und in das Gefäß virulent zum Aufschäumen desselben eingebracht werden kann.

Ferner sind Vorrichtungen zum Aufschäumen von Getränken, beispielsweise von Milch zum Bereiten eines Cappuccinos bekannt geworden, die ebenfalls über einen Dampferzeuger verfügen. Dieses ist jedoch nicht Teil eines Kaffeeautomaten. Bei einer solchen Vorrichtung ist das Dampfrohr in vertikaler Richtung beweglich, über einen flexiblen Schlauchabschnitt mit dem Dampferzeuger verbunden, höheneinrichtbar gehalten. Bei einer solchen Vorrichtung wird das Gefäß auf einer entsprechenden Halteeinrichtung, beispielsweise einem Abtropfblech abgesetzt. Das Dampfrohr ist dann in das Gefäß abzusenken, so dass bei einer solchen Vorrichtung eine Aufschäumung des in dem Gefäß befindlichen Getränks möglich ist, ohne dass das Gefäß - wie üblicherweise bei Kaffeevollautomaten - in der Hand gehalten werden muß.

Nachteilig beim Aufschäumen eines Getränks durch Einsatz von Dampf, ist, dass dieses zum einen mit einer nicht unerheblichen Lautstärke verbunden ist. Überdies wird durch den in das Getränk eingebrachten Dampf das zu bereitende Getränk selbst verwässert. Bei den beschriebenen Geräten ist der Einsatz einer Einrichtung zum Erzeugen eines "trockenen" Dampf nicht wirtschaftlich.

Ferner ist bei dampfbetriebenen Aufschäumvorrichtungen zu beachten, dass das Dampfrohr und insbesondere die Dampfdüse nur aufwendig zu reinigen sind. Ein solches Reinigen ist jedoch notwendig, damit Reste eines zuerst aufgeschäumten Getränks nicht in ein anderes, als nächstes aufzuschäumtendes Getränk übertragen werden. Um wirksam ein solches Dampfrohr und eine solche Dampfdüse zu reinigen, ist zwischen dem Aufschäumen von zwei Getränken unterschiedlicher Art ein Reinigungsbetrieb der Aufschäumeinrichtung mit Wasser notwendig.

Unter anderem aus diesem Grunde war es bislang nicht möglich, einen Kaffeeautomaten bereitzustellen, bei dem die Zubereitung eines Cappuccino-Getränks vollautomatisch erfolgt.

Aus EP-A-12 64 567 ist eine Vorrichtung gemäß des Oberbegriffs des unabängigen Anspruchs 1 bekannt.

Ausgehend von dem diskutierten Stand der Technik liegt der Erfindung daher die Aufgabe zugrunde, eine eingangs genannte Vorrichtung zum Aufschäumen eines Getränks sowie einen mit einer solchen Vorrichtung ausgerüsteten Kaffeeautomaten dergestalt weiterzubilden, dass mit dieser Vorrichtung eine automatische Aufschäumung eines in einem Gefäß enthaltenen Getränkes möglich ist.

Diese Aufgabe wird erfindungsgemäß durch eine Vorrichtung nach Anspruch 1 gelöst.

Bei dieser Vorrichtung dient ein Elektromotor zum Erzeugen des zum Aufschäumen benötigten Mediums, das in diesem Falle mechanische Energie ist, indem dieser eine Welle antreibt und somit durch das In-Drehbewegung-Versetzen der Welle mechanische Energie erzeugt. An dem freien Ende der von dem Elektromotor angetriebenen Welle ist ein Schaumschläger angeordnet. Insofern arbeitet diese Vorrichtung ohne die sich bei einem Betrieb einer Dampf verwendenden Aufschäumvorrichtung einstellenden Nachteile.

Die den Schaumschläger tragende Welle ist in Längserstreckung ihrer Drehachse beweglich gelagert. Somit ist es möglich, den Schaumschläger in ein Gefäß absenken und aus diesem wieder anheben zu können. Dieser Vorgang erfolgt zweckmäßigerweise ebenfalls elektromotorisch. Ferner verfügt die Aufschäumvorrichtung über Mittel, damit der Schaumschläger bei einem Betrieb der Einrichtung zum Aufschäumen eines Getränks im Bereich des beim Vorgang des Aufschäumens absinkenden Flüssigkeitsspiegels positioniert bleibt. Eine Anordnung des Schaumschlägers im Bereich des Flüssigkeitsspiegels ist zweckmäßig, da dann der gewünschte Aufschäumvorgang besonders effektiv durchgeführt wird. Beim Aufschäumen sinkt der Flüssigkeitsspiegel ab, so dass über diese Mittel die Position des Schaumschlägers dem absinkenden Flüssigkeitsspiegel entsprechend nachgefahren wird.

Die Bewegbarkeit der Welle mit dem Schaumschläger in Längserstrekkung ihrer Drehachse kann alleinig die Welle mit dem Schaumschläger betreffen. Gleichfalls ist es möglich, die Welle mit dem Schaumschläger einschließlich des zum Antrieb der Welle vorgesehenen Elektromotors entsprechend bewegbar vorzusehen, wobei ebenfalls ein elektromotorischer Antrieb zum Absenken und Anheben der aus dem Elektromotor und der Welle mit dem Schaumschläger gebildeten Einheit zweckmäßig ist.

Eine solche Aufschäumvorrichtung kann ohne weiteres in einen Kaffeeautomaten integriert sein, da sämtliche Vorgänge elektromotorisch ansteuerbar sind. Der im Rahmen dieser Ausführungen verwendete Begriff "Kaffeeautomat" umfasst Kaffeemaschinen aller Art, insbesondere die sogenannten Kaffeevollautomaten.

Zum Positionieren des Schaumschlägers im Bereich des beim Aufschäumen absinkenden Flüssigkeitsspiegel kann vorgesehen sein, dass der die Welle antreibende Elektromotor im Hinblick auf bestimmte Betriebsparameter überwacht wird und dass bei auftretenden Betriebsänderungen eine Korrektur hinsichtlich der Positionierung des Schaumschlägers erfolgt. Überwacht werden kann beispielsweise die Stromaufnahme des Elektromotors oder auch seine Drehzahl. Taucht der Schaumschläger zu wenig in die Flüssigkeit ein, oder befindet sich dieser oberhalb des Flüssigkeitsspiegels, erniedrigt sich die Stromaufnahme bzw. die Drehzahl erhöht sich, jeweils ausgehend von einer Positionierung des Schaumschlägers in dem gewünschten Bereich des Flüssigkeitsspiegels. Befindet sich der Schaumschläger zu weit in die Flüssigkeit abgesenkt, erhöht sich die Stromaufnahme; dagegen erniedrigt sich die Drehzahl. Bei Detektion des einen oder anderen Zustandes erfolgt ein Nachregeln der Positionierung des Schaumschlägers.

Neben einem solchen aktiven Regelkreis kann ebenfalls vorgesehen sein, den Schaumschläger mit einem Schwimmer auszustatten, so dass dieser mit seiner Welle selbsttätig den beim Durchführen des Aufschäumens absinkenden Flüssigkeitsspiegel folgt.

Zweckmäßig ist die Ausgestaltung einer solchen Aufschäumvorrichtung, bei der der die Welle antreibende Elektromotor ebenfalls dazu dient, die Welle mit dem endseitig angeordneten Schaumschläger in das Gefäß abzusenken und aus diesem wieder anzuheben. Realisiert werden kann dieses beispielsweise durch unterschiedlichen Antrieb der Welle bei unterschiedlicher Drehrichtung des Elektromotors.

Ein Reinigen des Schaumschlägers und der an den Schaumschläger grenzenden Abschnitte der Welle ist bei der beschriebenen Aufschäumvorrichtung ohne weiteres durch einen Spülvorgang möglich. Ist eine solche Aufschäumvorrichtung Teil eines Kaffeeautomaten, kann das zum Reinigen des oder der Kaffeeauslässe nach einem Brühvorgang genutzte Wasser verwendet werden, um anschließend über den Schaumschläger und die an diesen angrenzenden Abschnitte der Welle geführt zu werden. Zu diesem Zweck können die Kaffeeauslässe und/oder die Welle mit dem Schaumschläger bei dem Reinigungsvorgang so zueinander positioniert werden, daß das aus dem oder den Kaffeeauslässen austretende Reinigungswasser den Schaumschläger geführt wird.

Nachfolgend ist die Erfindung anhand eines Ausführungsbeispiels unter Bezugnahme auf die beigefügten Figuren beschrieben. Es zeigen:
- **Fig. 1:**: Eine schematisierte Ansicht eines Kaffeeautomaten mit einer Aufschäumvorrichtung,
- **Fig. 2:**: Eine Darstellung eines an dem freien Ende einer Antriebswelle befindlichen Schaumschlägers der Aufschäumvorrichtung der Figur 1 und
- **Fig. 3a - 3c:**: Eine schematisierte Darstellung der Aufschäumvorrichtung als Teil des Kaffeeautomaten bei unterschiedlichen Schritten zum Aufschäumen eines in einem Gefäß befindlichen Getränkes.

Ein Kaffeeautomat 1 ist als Vollautomat konzipiert und umfasst neben den beiden sichtbaren Kaffeeauslässen 2, 3 ein Dampfrohr 4, an dessen freiem Ende eine Dampfdüse 5 angeordnet ist. Das Dampfrohr 4 dient zum Bereitstellen von Dampf, beispielsweise um Gläser oder Tassen anzuwärmen. In das Gehäuse 6 des Kaffeeautomaten 1 ist eine Aufnahme 7 eingelassen, in der eine Bedienkonsole 8 eingesetzt ist. Die Bedienkonsole 8 umfasst als elektrische Schalter mehrere Taster T, mit denen die unterschiedlichen Funktionen des Kaffeeautomaten 1 ausgelöst werden können. Mehrere LED's L dienen als Kontrolleinzeigemittel zum Anzeigen, dass ein bestimmter Taster T betätigt worden ist, oder auch als Auswahlanzeiger, wenn mit einem Taster T unterschiedliche Funktionen ausübbar sind, sowie zum Darstellen von Fehlfunktionen. In dem Gehäuse 6 des Kaffeeautomaten 1 ist ein Mahlwerk zum Mahlen von Kaffeebohnen angeordnet. Zum Bevorraten von Kaffeebohnen ist dem Kaffeeautomaten 1 ein Kaffeebohnenbehälter 9 zugeordnet, der mittels eines Kupplungsringes mit dem Gehäuse 6 des Kaffeeautomaten 1 verbunden ist. Der Kaffeebohnenbehälter 9 ist aufgesetzt auf eine oberseitige Öffnung des Gehäuses 6, unterhalb der das Mahlwerk positioniert ist.

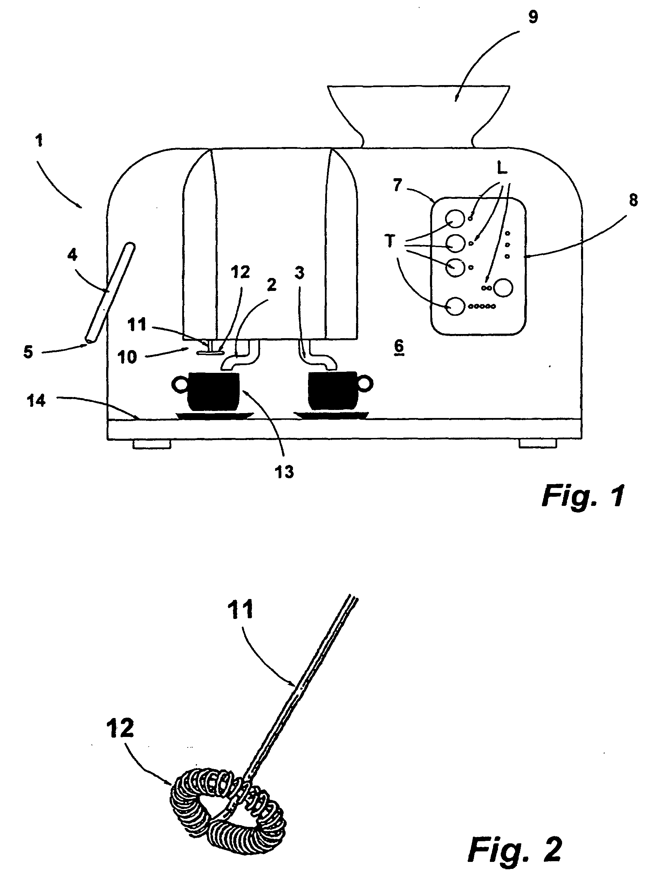

Der Kaffeeautomat 1 verfügt ferner über eine Aufschäumvorrichtung 10 zum Aufschäumen eines Getränks, beispielsweise von Milch zum Bereiten eines Cappuccinos. Die Aufschäumvorrichtung 10 umfaßt eine elektromotorisch rotierend angetriebene Welle 11, an deren unteren freien Ende ein Schaumschläger 12, drehfest mit der Welle 11 verbunden, angeordnet ist. In einer vergrößerten Darstellung ist der untere Abschnitt der Welle 11 mit dem Schaumschläger 12 in Figur 2 wiedergegeben. Befindet sich der Schaumschläger 12 im Bereich des Flüssigkeitsspiegels eines in einem Gefäß befindlichen Getränks, beispielsweise von Milch, kann durch den Schaumschläger 12 bei einem rotierenden Antrieb desselben eine Aufschäumung des Getränks vorgenommen werden.

Die Aufschäumvorrichtung 10 ist bei dem dargestellten Ausführungsbeispiel integraler Bestandteil des Kaffeeautomaten 1. Teil der Aufschäumvorrichtung 10 ist ferner eine Einrichtung zum Halten eines Gefäßes, beispielsweise einer Tasse 13. Diese Einrichtung zum Absetzen der Tasse 13 ist bei dem dargestellten Ausführungsbeispiel ein mit dem Bezugszeichen 14 gekennzeichnetes Abtropfblech. Durch Aufsetzen der Tasse 13 auf das Abtropfblech 14 befindet sich diese in einer definierten Position bezüglich der Welle 11 bzw. des Schaumschlägers 12.

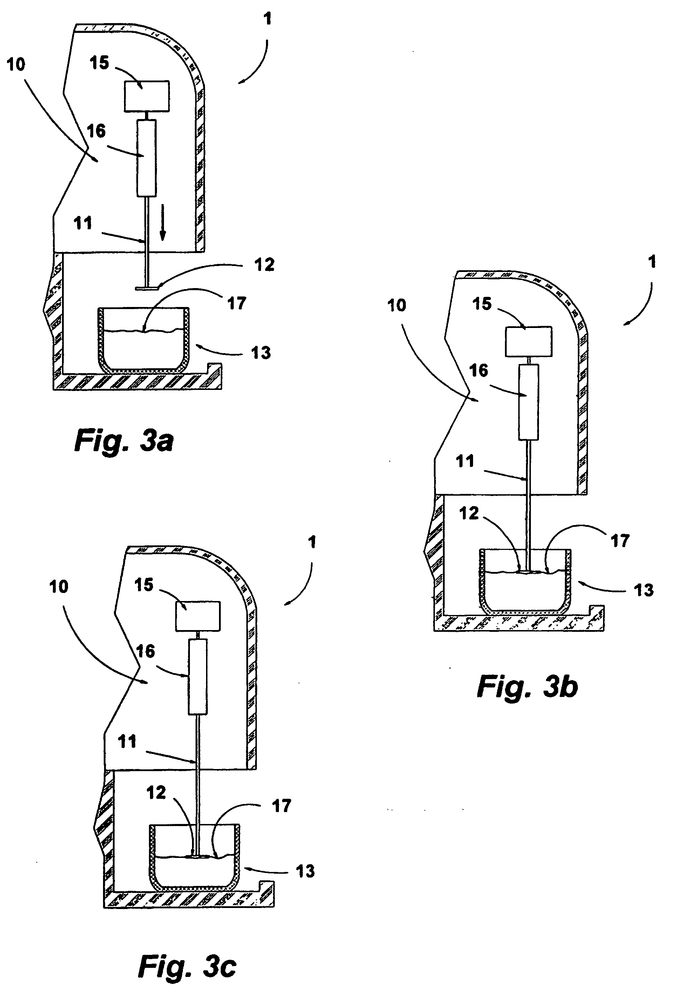

Schematisiert ist die Aufschäumvorrichtung 10 ohne die weiteren Bestandteile der Kaffeemaschine 1 in Figur 3a in einem Querschnitt durch die Kaffeemaschine 1 wiedergegeben. Die Aufschäumvorrichtung 10 verfügt über einen Elektromotor 15, mit dem die Welle 11 und durch diese der Schaumschläger 12 rotierend antreibbar ist. Die Welle 11 wird durch den Elektromotor 15 unter Zwischenschaltung eines Getriebes 16 angetrieben. Das Getriebe 16 ist ausgestaltet, dass bei einer ersten Ansteuerung des Elektromotors 15 bei einem gewünschten Aufschäumvorgang durch diesen zunächst die Welle 11 mit ihrem endseitig angeordneten Schaumschläger 12 abgesenkt wird, wie dies durch den Pfeil in Figur 3a symbolisiert wiedergegeben ist. Der Absenkvorgang der Welle 11 und des Schaumschlägers 12 wird so lange fortgesetzt, bis sich der Schaumschläger 12 im Bereich des Flüssigkeitsspiegels 17 eines in der Tasse 13 befindlichen Getränks, beispielsweise Milch befindet. Eine Beendigung der Absenkbewegung kann manuell vorgenommen werden. Gleichfalls ist es möglich, um eine Positionierung des Schaumschlägers 12 im Bereich des Flüssigkeitsspiegels 17 bei unterschiedlichen Flüssigkeitsständen zu halten, das Eintauchen des Schaumschlägers 12 in die Flüssigkeit durch einen Sensor zu erfassen und somit den Absenkvorgang durch eine solche Steuerung zu beenden. Befindet sich der Schaumschläger 12 im Bereich des Flüssigkeitsspiegels 17 - wie in Figur 3b wiedergegeben - wird durch den Elektromotor 15 unter Zwischenschaltung des Getriebes 16 die Welle 11 mit ihrem Schaumschläger 12 rotierend angetrieben, um mit dem gewünschten Aufschäumvorgang zu beginnen. Bei dem dargestellten Ausführungsbeispiel erfolgt eine Überwachung der aktuellen Drehzahl des Elektromotors 15, um bei Drehzahländerungen, die systemseitig auf eine geänderte Position des Schaumschlägers 12 in Bezug auf den Flüssigkeitsspiegel 17 schließen lassen, die Welle 11 mit dem Schaumschläger 12 entsprechend nachfahren zu können. Beim Durchführen des Aufschäumvorganges des in der Tasse 13 enthaltenen Getränks sinkt der Flüssigkeitsspiegel 17 ab. Dieses Absinken wird durch den Elektromotor 15 im Wege einer Drehzahlerhöhung erkannt, so daß entsprechend die Welle 11 mit dem Schaumschläger 12 dem sinkenden Flüssigkeitsspiegel 17 nachgefahren wird. Taucht der Schaumschläger 12 zu weit in die in der Tasse 13 enthaltene Flüssigkeit ein, würde dies eine Drehzahlreduzierung zur Folge haben; die Welle 11 mit dem Schaumschläger 12 würde dann gegenüber dem Flüssigkeitsspiegel 17 etwas angehoben werden.

Anstelle der Verwendung eines Sensors zum Feststellen des Eintauchens des Schaumschlägers 12 in die Flüssigkeit kann auch folgendermaßen vorgegangen werden. Zunächst wird der Schaumschläger 12 vollständig abgesenkt, so dass dieser im Bereich des Bodens des Behälters angeordnet ist. Anschließend wird der Schaumschläger angetrieben und angehoben. Die Überwachung dahingehend, wann der Schaumschläger 12 sich im Bereich des Flüssigkeitsspiegels befindet, erfolgt durch die zuvor beschriebene Motorüberwachung.

Nach Beenden des Aufschäumvorganges, bei der sich der Schaumschläger 12 etwa in der in Figur 3c befindlichen Position befindet, wird die Drehrichtung des Elektromotors 15 geändert, so daß dann unter Zwischenschaltung des Getriebes 16 die Welle 11 mit dem Schaumschläger 12 aus der Tasse 13 heraus und in ihre in Figur 3a gezeigte Position gebracht wird.

Der Kaffeeautomat 1 kann programmiert sein, damit eine Cappuccinozubereitung vollautomatisch erfolgt. Nach vollautomatischem Beenden des Aufschäumvorganges erfolgt die Kaffeezubereitung und ein Zuführen des frisch gebrühten Kaffees in die aufgeschäumte Milch.

Zum Reinigen des Schaumschlägers 12 wird die Welle 11 mit dem Schaumschläger 12 vor dem Schritt des Reinigens des Kaffeeauslasses 2 abgesenkt, damit das beim Reinigen der Brühkammer und des Kaffeeauslasses 2 austretende Wasser über den Schaumschläger 12 gespült wird. Anschließend wird die Welle 11 mit dem Schaumschläger 12 wieder in ihre Ausgangsposition zurückgefahren. Grundsätzlich ist es möglich, den Reinigungsvorgang der Kaffeemaschine zum Reinigen des Kaffeeauslasses 2 und des Schaumschlägers 12 erst zu starten, wenn die Tasse 13 mit dem frisch bereiteten Cappuccino von ihrer in den Figuren gezeigten Position entfernt worden ist.

### Bezugszeichenliste

- 1: Kaffeeautomat
- 2: Kaffeeauslass
- 3: Kaffeeauslass
- 4: Dampfrohr
- 5: Dampfdüse
- 6: Gehäuse
- 7: Aufnahme
- 8: Bedienkonsole
- 9: Kaffeebohenbehälter
- 10: Aufschäumvorrichtung
- 11: Welle
- 12: Schaumschläger
- 13: Tasse
- 14: Abtropfblech
- 15: Elektromotor
- 16: Getriebe
- 17: Flüssigkeitsspiegel

- L: LED
- T: Taster

## Patentansprüche

1. Vorrichtung zum Aufschäumen eines Getränks, etwa von Milch oder eines Milchmischgetränks, umfassend eine Einrichtung (14) zum Halten eines das aufzuschäumende Getränk enthaltenden Gefäßes (13) sowie umfassend eine Einrichtung zum Erzeugen des zum Aufschäumen benötigten Mediums mit einer in das Gefäß (13) absenkbaren Verbindungselement zum Zuführen des Mediums von der Einrichtung zu dem in dem Gefäß (13) befindlichen aufzuschäumenden Getränk, wobei als Einrichtung ein Elektromotor (15) zum Antreiben einer Welle (11) mit einem Schaumschläger (12) an ihrem freien zu dem Gefäß (13) weisenden Ende vorgesehen ist, die mit dem Schaumschläger (12) in Längserstreckung ihrer Drehachse beweglich gelagert ist, **dadurch gekennzeichnet, dass** die Vorrichtung (10) über Mittel zum automatischen Positionieren des Schaumschlägers (12) bei einem Betrieb der Einrichtung (15) zum Aufschäumen eines Getränkes im Bereich des sich beim Aufschäumen absinkenden Flüssigkeitsspiegels (17) verfügt.

2. Vorrichtung nach Anspruch 1, **dadurch gekennzeichnet, dass** durch den Elektromotor (15) die Welle (11) mit ihrem Schaumschläger (12) durch Zwischenschaltung eines Getriebes (16) in Längserstreckung der Drehachse der Welle (11) bewegbar ist und dass der Elektromotor (15) in beide Drehrichtungen ansteuerbar ist.

3. Vorrichtung nach Anspruch 1, **dadurch gekennzeichnet, dass** die Einheit gebildet aus dem Elektromotor, der Welle und dem Schaumschläger insgesamt in Längserstreckung der Drehachse durch einen weiteren Elektromotor bewegbar ist.

4. Vorrichtung nach einem der Ansprüche 1 bis 3, **dadurch gekennzeichnet, dass** der Schaumschläger einen Schwimmer trägt.

5. Vorrichtung nach einem der Ansprüche 1 bis 3, **dadurch gekennzeichnet, dass** die Vorrichtung eine Steuereinrichtung aufweist, mit der ein oder mehrere Betriebszustände des Elektromotors überwacht werden.

6. Kaffeeautomat mit einer Vorrichtung nach Anspruch 1.

7. Kaffeeautomat mit einer Vorrichtung nach Anspruch 6, **dadurch gekennzeichnet, dass** durch den Elektromotor (15) die Welle (11) mit ihrem Schaumschläger (12) durch Zwischenschaltung eines Getriebes (16) in Längserstreckung der Drehachse der Welle (11) bewegbar ist und dass der Elektromotor (15) in beide Drehrichtungen ansteuerbar ist.

8. Kaffeeautomat mit einer Vorrichtung nach Anspruch 6, **dadurch gekennzeichnet, dass** die Einheit gebildet aus dem Elektromotor, der Welle und dem Schaumschläger insgesamt in Längserstrekkung der Drehachse durch einen weiteren Elektromotor bewegbar ist.

9. Kaffeeautomat mit einer Vorrichtung nach einem der Ansprüche 6 bis 8, **dadurch gekennzeichnet, dass** der Schaumschläger einen Schwimmer trägt.

10. Kaffeeautomat mit einer Vorrichtung nach einem der Ansprüche 6 bis 8, **dadurch gekennzeichnet, dass** die Vorrichtung eine Steuereinrichtung aufweist, mit der ein oder mehrere Betriebszustände des Elektromotors überwacht werden.

11. Kaffeeautomat nach einem der Ansprüche 6 bis 10, **dadurch gekennzeichnet, dass** die Welle (11) mit dem Schaumschläger (12) benachbart und in der Nähe zu einem Kaffeeauslaß (2) dergestalt angeordnet ist, dass beide Elemente - Schaumschläger (12) und Kaffeeauslaß (2) - in der Flucht der Öffnung eines ein aufzuschäumendes Getränk enthaltenen Gefäßes (13) angeordnet sind.

## Claims

1. Device for frothing up a drink, for instance milk or a milk mixture drink, comprising a mechanism (14) for holding a receptacle (13) which contains the drink to be frothed up and also comprising a mechanism for producing the medium required for the frothing up, having a connection element, which can be lowered into the receptacle (13), for supplying the medium from the mechanism to the drink which is to be frothed up and is situated in the receptacle (13), an electric motor (15) being provided as mechanism for driving a shaft (11) with a froth beater (12) on its free end which points towards the receptacle (13), which is mounted movably with the froth beater (12) in the longitudinal extension of its axis of rotation, **characterised in that** the device (10) has means for automatic positioning of the froth beater (12) during an operation of the mechanism (15) for frothing up a drink in the region of the level of the liquid (17) which drops during frothing up.

2. Device according to claim 1, **characterised in that** the shaft (11) with its froth beater (12) can be moved by the electric motor (15), with interposition of a gear mechanism (16), in the longitudinal extension of the axis of rotation of the shaft (11) and **in that** the electric motor (15) can be actuated in both directions of rotation.

3. Device according to claim 1, **characterised in that** the unit formed by the electric motor, the shaft and the froth beater can be moved in its entirety in the longitudinal extension of the axis of rotation by a further electric motor.

4. Device according to one of the claims 1 to 3, **characterised in that** the froth beater bears a float.

5. Device according to one of the claims 1 to 3, **characterised in that** the device has a control mechanism, with which one or more operational states of the electric motor are monitored.

6. Coffee machine having a device according to claim 1.

7. Coffee machine having a device according to claim 6, **characterised in that** the shaft (11) with its froth beater (12) can be moved by the electric motor (15), with interposition of a gear mechanism (16), in the longitudinal extension of the axis of rotation of the shaft (11) and **in that** the electric motor (15) can be actuated in both directions of rotation.

8. Coffee machine having a device according to claim 6, **characterised in that** the unit formed by the electric motor, the shaft and the froth beater can be moved in its entirety in the longitudinal direction of the axis of rotation by a further electric motor.

9. Coffee machine having a device according to one of the claims 6 to 8, **characterised in that** the froth beater bears a float.

10. Coffee machine having a device according to one of the claims 6 to 8, **characterised in that** the device has a control mechanism, with which one or more operational states of the electric motor are monitored.

11. Coffee machine according to one of the claims 6 to 10, **characterised in that** the shaft (11) with the froth beater (12) is disposed adjacent to and in the vicinity of a coffee outlet (2) in such a manner that both elements - froth beater (12) and coffee outlet (2) - are disposed aligned with the opening of a receptacle (13) containing a drink to be frothed up.

## Revendications

1. Dispositif pour faire mousser une boisson, par exemple du lait ou une boisson mélangée à du lait, comprenant un équipement (14) pour maintenir le récipient (13) contenant la boisson à faire mousser et comprenant également un équipement pour produire le médium indispensable pour le moussage comportant un élément de liaison pouvant être abaissé dans le récipient (13) afin d'acheminer le medium depuis l'équipement vers la boisson à faire mousser se trouvant dans le récipient (13), un moteur électrique (15) étant prévu en tant qu'équipement pour entraîner un arbre (11) muni à son extrémité libre orientée vers le récipient (13), d'un batteur à mousse, lequel arbre (11) supportant le batteur à mousse (12) étant logé de manière mobile dans le sens longitudinal de son axe de rotation, **caractérisé en ce que** le dispositif (10) dispose de moyens pour positionner automatiquement le batteur à mousse (12) lors du fonctionnement de l'équipement (15) destiné à faire mousser une boisson au niveau d'une surface de liquide (17) qui s'abaisse au fur et à mesure du moussage.

2. Dispositif selon la revendication 1 **caractérisé en ce que** l'arbre (11) muni de son batteur à mousse (12) peut être déplacé dans le sens longitudinal de l'axe de rotation de l'arbre (11) par le moteur électrique (15) par l'intermédiaire d'un engrenage (16) et que le moteur électrique (15) peut fonctionner dans les deux sens de rotation.

3. Dispositif selon la revendication 1 **caractérisé en ce que** l'unité constituée du moteur électrique, de l'arbre et du batteur à mousse peut dans sa totalité être déplacée dans le sens longitudinal de l'axe de rotation par un autre moteur électrique.

4. Dispositif selon l'une des revendications 1 à 3 **caractérisé en ce que** le batteur à mousse comporte un flotteur.

5. Dispositif selon l'une des revendications 1 à 3 **caractérisé en ce que** le dispositif présente un équipement unité de commande permettant de surveiller un ou plusieurs états de fonctionnement du moteur électrique.

6. Machine à café muni d'un dispositif selon la revendication 1.

7. Machine à café munie d'un dispositif selon la revendication 6 **caractérisée en ce que** l'arbre (11) muni de son batteur à mousse (12) peut être déplacé dans le sens longitudinal de l'axe de rotation de l'arbre (11) par le moteur électrique (15) par l'intermédiaire d'un engrenage (16) et que le moteur électrique (15) peut fonctionner dans les deux sens de rotation.

8. Machine à café munie d'un dispositif selon la revendication 6 **caractérisée en ce que** l'unité constituée du moteur électrique, de l'arbre et du batteur à mousse peut dans sa totalité être déplacée dans le sens longitudinal de l'axe de rotation par un autre moteur électrique.

9. Machine à café munie d'un dispositif selon l'une des revendications 6 à 8 **caractérisée en ce que** le batteur à mousse comporte un flotteur.

10. Machine à café munie d'un dispositif selon l'une des revendications 6 à 8 **caractérisée en ce que** le dispositif présente un équipement de commande permettant de surveiller un ou plusieurs états de fonctionnement du moteur électrique.

11. Machine à café selon l'une des revendications 6 à 10 **caractérisée en ce que** l'arbre (11) muni du batteur à mousse (12) est disposé à côté et à proximité d'une sortie de café (2) de telle sorte que les deux éléments - batteur à mousse (12) et sortie de café (2) - s'alignent avec l'ouverture d'un récipient (13) contenant une boisson à faire mousser.
